Europäisches Patentamt

European Patent Office

Office européen des brevets

(11) Publication number: **0 302 152 B1**

## EUROPEAN PATENT SPECIFICATION

(45) Date of publication of patent specification: **26.02.92**

(51) Int. Cl.⁵: **G01V 1/153**, B06B 1/16, B65G 27/16

(21) Application number: **87306944.7**

(22) Date of filing: **05.08.87**

---

(54) **Oscillating orbital vibrator.**

---

(43) Date of publication of application:
**08.02.89 Bulletin 89/06**

(45) Publication of the grant of the patent:
**26.02.92 Bulletin 92/09**

(84) Designated Contracting States:
**DE FR GB**

(56) References cited:
**US-A- 3 600 957**
**US-A- 4 234 053**

(73) Proprietor: **CONOCO INC.**
**1000 South Pine Street**
**Ponca City Oklahoma 74603(US)**

(72) Inventor: **Cole, Jack H.**
**3613 Nottingham Circle**
**Ponca City OK 74604(US)**

(74) Representative: **Davies, Christopher Robert et al**
**Frank B. Dehn & Co. Imperial House 15-19 Kingsway**
**London WC2B 6UZ(GB)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

EP 0 302 152 B1

## Description

The present invention relates to an improved orbital vibrator. More particularly, the present invention relates to an orbital vibrator of the type used to generate seismic reference signals in geophysical prospecting systems.

The use of orbital vibrators as seismic waveform generators is well known in the area of geophysical prospecting for oil, or the like. Typically, the vibrators take the form of eccentric swinging weights which are used in various combinations to generate the desired seismic signal(s). See for example U.S. Patent Nos. 2,745,507; 2,989,869; and 4,234,053. A vibrator for use in a power tool and having a rotatable shaft together with a crank is also known from US 3,600,957.

In order to generate a seismic signal of sufficient magnitude, these swinging weights must be of appreciable mass and be rotated at rates which may exceed 3000 r.p.m.. Accordingly, these weights are subjected to large internal pressures as a result of centrifugal force. Further, the drag due to wind resistance (composed of frontal area drag and skin friction components) increase these internal pressures and decrease the efficiency of the system. Accordingly, these orbital vibrators must be constructed of exotic, and hence expensive, high strength materials.

It is an object of the present invention to provide an improved orbital vibrator which will overcome these deficiencies.

Viewed from one aspect the invention provides an orbital vibrator comprising

(a) a rotatable shaft with a crank attached thereto;

(b) a bearing mounted on said crank characterised by;

(c) a reaction mass mounted on said crank by means of said bearing and, by virtue of said mounting, orbitally oscillating about said crank in response to the rotation of said shaft in order to induce a vibratory motion.

The orbital vibrator of the preferred embodiment comprises a hollow cylindrical reaction mass which is mounted by means of a bearing on a crank shaft. The eccentriciy of the crank causes the reaction mass to orbitally oscillate about the center line of the shaft in response to the shaft's rotation. Since there is no leading edge on the weight of the preferred embodiment, there is a significant reduction in frontal area drag. The fact that the orbital vibrator does not rotate at high speed but rather orbitally oscillates serves to further reduce drag losses resulting from the skin friction component. The reduction of the internal pressures to which the orbital vibrator is exposed enables a less expensive material to be used.

An embodiment of the invention will now be described, by way of example only, with reference to the accompanying drawings, wherein:-

Fig. 1 is a partial vertical cross-sectional view of the orbital vibrator of the present invention;

Fig. 2 is a lateral cross-sectional view of the orbital vibrator of the present invention as seen along line 2-2 in Fig. 1;

Fig. 3 is a vertical cross-sectional view similar to Fig. 1 of a prior art swinging weight; and

Fig. 4 is a lateral cross-sectional view similar to Fig. 2 of the prior art device as seen along line 4-4 in Fig. 3.

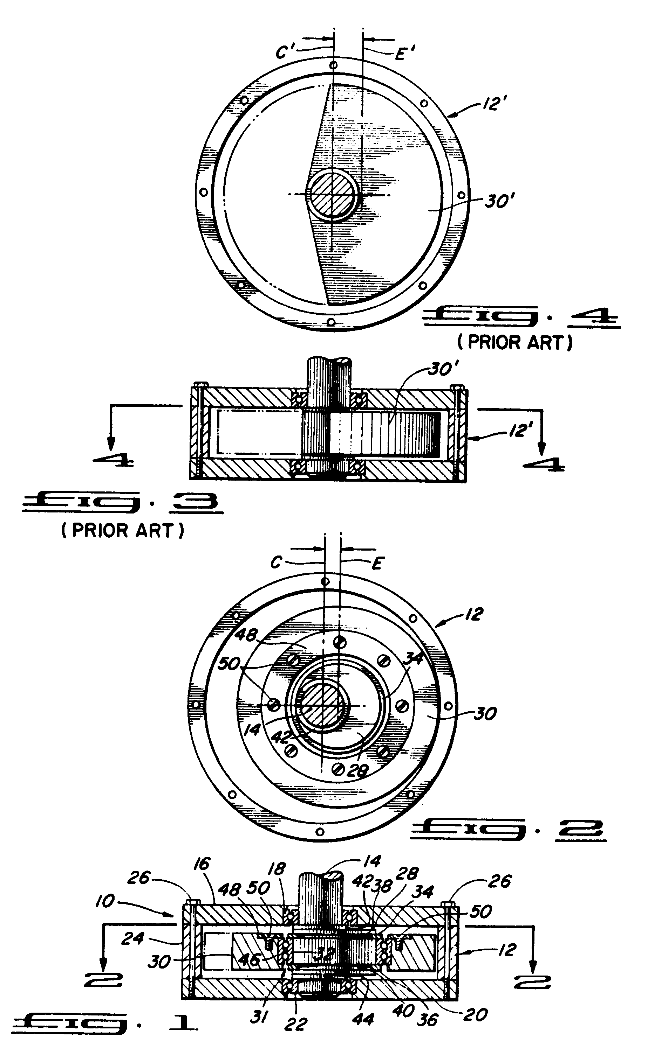

An orbital vibrator of the present invention is shown in Figs. 1 and 2 generally at 10. The orbital vibrator 10 comprises a housing shown generally at 12. Crank shaft 14 extends through the top wall 16 of the housing and is supported therein for rotation by bearing 18. The terminal end of shaft 14 is received in rotary bearing 22 in the bottom wall 20 of housing 12. Although the bearings have all be depicted as ball bearings in the drawing, they could be roller bearings or other suitable bearings, if desired.

Top wall 16 and bottom wall 20 of housing 12 are secured to annular wall 24 by a plurality of threaded fasteners 26. Fasteners 26 are depicted as threadingly engaging bottom wall 20 but could, alternatively, extend beyond wall 20 and be secured by conventional nuts (not shown). As a further alternative, the annular wall 24 or the bottom of housing 12 could be formed with integral flanges for attachment to a platform, or the like.

The crank comprises a circular disc-shaped member 28 whose centerline E is mounted eccentrically to the centerline C of crank shaft 14. Preferably, circular eccentric member 28 is formed integrally on shaft 14, although member 28 could be a separate piece which is keyed to the shaft. Ordinarily, however, design criteria will dictate that member 28 be formed integrally with shaft 14 to provide the necessary strength.

Reaction mass 30 is formed as a hollow cylindrical member with a concentric circular opening which receives bearing 31. The inner race 32 of bearing 31 encircles the outside of disc-shaped member 28 and is retained thereon by snap rings 34 and 36 which are received in grooves 38 and 40, respectively, which are formed in the periphery of circular member 28. Shoulders 42 and 44 are formed on either side of circular member 28 and engage bearings 18 and 22 which are thrust bearings as well as rotary bearings. Shoulders 42 and 44 coact with thrust bearings 18 and 22 to prevent axial movement of orbital vibrator 10 along shaft 14. While it is again preferred that shoulders 42 and 44 be formed integrally with shaft 14, where circular member 28 is a separate piece, one or both shoulders 42 and 44 can be provided by a circlip engaging in annular grooves (not shown).

Outer race 46 of bearing 31 is secured in place about the inner periphery of reaction mass 30 by virtue of an annular shoulder formed on reaction mass 30 and an annular retaining ring 48 secured to the opposite side of reaction mass 30 by a plurality of threaded fasteners 50.

In operation, crank shaft 14 is rotated at a high rate of speed and eccentrically mounted disc-shaped member 28 causes reaction mass 30 to orbitally oscillate with respect to the centerline C of shaft 14. Reaction mass 30 does not experience significant rotational motion as was required of swinging weight 30′ (Figs. 3 and 4). In fact, reaction mass 30 is designed to remain stationary during the operation of the orbital vibrator 10 of the present invention with the shaft 14, housing 12 and the member to which the vibrator is attached experiencing the desired vibrational motion. By utilizing these weights on paired counter-rotating shafts, the horizontal component of vibration can be canceled resulting in the vertical component, only, being retained to produce a seismic signal.

Comparing the orbital vibrator of the present invention with the prior art device depicted in Figs. 3 and 4, it can be seen that the orbitally oscillating reaction mass has the following advantages. 1) There is no pronounced leading edge to create wind resistance losses due to frontal area drag. 2) A point on the periphery of the reaction mass travels only a distance equivalent to the circumference of the circular member 28 rather than entirely around the perimeter of the rotational envelope. This means the velocity of such a point is significantly reduced. With reduced velocity, wind drag forces (a function of velocity squared) and the internal forces within the reaction mass created by centrifugal force are reduced even more. 3) Because the forces to which the reaction mass is exposed are significantly reduced, the reaction mass 30 can be made of softer, less expensive materials. For example, the reaction mass can be made of carbon steel rather than the more expensive high strength alloys. Only the bearing 31 need be made of high strength materials (i.e., alloy steel). If desired, an annular envelope of high strength material could be used to gird the periphery of the reaction mass of the present invention. Such a ring would protect against possible failure should a bearing lock subjecting the reaction mass to the centrifugal forces of swinging weights.

The force F generated by an orbital or swinging weight is given by the expression

$$F = \frac{W}{g}(2\pi f)^2 e$$

where W is the weight of the mass, g is the gravitational constant, f is the frequency in cycles per unit time and e is the eccentricity. Due to the reduction of the drag and the corresponding forces experienced by the reaction mass of the present invention, the material from which the weight is made can be selected to optimize the mass of weight rather than strength. In addition, since the orbital weight is configured as a complete annulus rather than a segment of a circle, it can comprise a larger mass. Since the weight of the orbital mass is greater, a smaller eccentricity (i.e., shorter distance between centerlines C and E) can be used to produce an equivalent force or a greater force can be produced with an equivalent eccentricity.

The orbital vibrator of the present invention improves efficiency by reducing wind resistance losses occurring as a result of both frontal drag and skin friction. These reductions occur due in part to the configuration of the orbital mass (i.e., no leading edge) and in part due to a lower rotational velocity. In addition, the lower rotational velocity decreases the internal pressures resulting from centrifugal force permitting the use of less expensive, higher density materials which further increases efficiency.

Although the orbital vibrator of the present invention has been disclosed specifically in conjunction with seismic prospecting equipment, it will be appreciated that this vibrator might be used for other purposes as well. For example, the orbital vibrator of the present invention might be used to produce vibratory energy used to insure material movement in hoppers, silos, or to produce motion of a vibratory conveyor or the like.

Various changes, alternatives or variations will become apparent to a person of ordinary skill in the art following a reading of the foregoing specification. It is intended that all such changes, alternatives, and variations as fall within the scope of the appended claims be considered part of the present invention.

**Claims**

1. An orbital vibrator comprising
   (a) a rotatable shaft (14) with a crank (28) attached thereto;
   (b) a bearing (31) mounted on said crank (28) and characterised by;
   (c) a reaction mass (30) mounted on said crank (28) by means of said bearing (31) and, by virtue of said mounting, orbitally oscillating about said crank (28) in response to the rotation of said shaft (14) in order to induce a vibratory motion.

2. The orbital vibrator of claim 1 wherein said crank (28) comprises a disc-shaped member whose centre is eccentrically positioned relative to the centerline (C) of said rotatable shaft (14).

3. The orbital vibrator of claim 2 wherein said disc-shaped member (28) is keyed to said rotatable shaft (14).

4. The orbital vibrator of claim 2 wherein said disc-shaped member (28) is integral with said rotatable shaft (14).

5. The orbital vibrator of any preceding claim wherein said reaction mass 30) is generally circular with a concentric circular opening therein.

6. The orbital vibrator of claim 5 wherein the concentric circular opening receives said bearing (31).

7. The orbital vibrator of any preceding claim wherein said bearing (31) is constructed of high-strength steel.

8. The orbital vibrator of claim 7 wherein the reaction mass (30) is constructed of carbon steel.

9. The orbital vibrator of any preceding claim further comprising a generally cylindrical housing (12) enshrouding said reaction mass (30).

10. The orbital vibrator of claim 9 wherein said rotatable shaft (14) is journaled for rotation in said housing (12).

11. The orbital vibrator of claim 10 wherein said rotatable shaft (14) includes two shoulders (42,44), one on each side of said crank (28) which engage bearings (18,22) in which the rotatable shaft (14) is journaled to maintain the position of said shaft (14) with respect to the housing (12).

12. The orbital vibrator of any preceding claim wherein the bearing (31) mounting said reaction mass (30) has an inner race (32) and an outer race (46).

13. The orbital vibrator of claim 12 wherein the inner race (32) of said bearing is secured to the crank mechanism by a pair of snap rings (34,36).

14. A seismic waveform generator having means for generating periodic seismic signals on a continuous basis said means comprising an orbital vibrator as claimed in any preceding claim.

**Revendications**

1. Vibreur orbital comprenant
   (a) un arbre de rotation (14) avec un excentrique (28) qui lui est fixé ;
   (b) un roulement (31) monté sur ledit excentrique (28) et caractérisé par
   (c) une masse réactive (30) montée sur ledit excentrique (28) au moyen dudit roulement (31) et, en vertu dudit montage, oscillant de manière orbitale autour dudit excentrique (28) en réponse à la rotation dudit arbre (14) afin de produire un mouvement vibratoire.

2. Vibreur orbital selon la revendication 1, dans lequel ledit excentrique (28) comprend une pièce en forme de disque dont le centre est positionné de manière excentrique par rapport à l'axe centre (C) dudit arbre de rotation (14).

3. Vibreur orbital selon la revendication 2, dans lequel ladite pièce en forme de disque (28) est clavetée audit arbre de rotation (14).

4. Vibreur orbital selon la revendication 2, dans lequel ladite pièce en forme de disque (28) fait partie intégrante dudit arbre de rotation (14).

5. Vibreur orbital selon l'une quelconque des revendications précédentes, dans lequel ladite masse réactive (30) a une forme générale circulaire avec en elle une ouverture circulaire concentrique.

6. Vibreur orbital selon la revendication 5, dans lequel l'ouverture concentrique circulaire reçoit ledit roulement (31).

7. Vibreur orbital selon l'une quelconque des revendications précédentes, dans lequel ledit roulement (31) est construit en acier à haute résistance.

8. Vibreur orbital selon la revendication 7, dans lequel la masse réactive (30) est construite en acier au carbone.

9. Vibreur orbital selon l'une quelconque des revendications précédentes comprenant en plus un boîtier de forme générale cylindrique (12) renfermant ladite masse réactive (30).

10. Vibreur orbital selon la revendication 9, dans lequel ledit arbre de rotation (14) est monté pour tourner dans ledit boîtier (12).

11. Vibreur orbital selon la revendication 10, dans lequel ledit arbre de rotation (14) comprend deux épaulements (42, 44), un de chaque côté dudit excentrique (28) qui viennent au contact des roulements (18, 22) dans lesquels l'arbre de rotation (14) est monté pour maintenir la position dudit arbre (14) par rapport au boîtier (12).

12. Vibreur orbital selon l'une quelconque des revendications précédentes dans lequel le roulement (31) de montage de ladite masse réactive (30) a une piste intérieure (32) et une piste extérieure (46).

13. Vibreur orbital selon la revendication 12, dans lequel la piste intérieure (32) dudit roulement est fixée au mécanisme de l'excentrique par une paire de circlips (34, 36).

14. Générateur d'ondes sismiques ayant des moyens pour générer des signaux sismiques périodiques en régime continu, lesdits moyens comprenant un vibreur orbital selon l'une quelconque des revendications précédentes.

**Patentansprüche**

1. Orbitalvibrator mit

   (a) einer drehbaren Welle (14) mit einer daran befestigten Kurbel (28),
   (b) einem auf der Kurbel (28) montierten Lager (31), **gekennzeichnet durch**
   c) eine Reaktionsmasse (30), welche mittels des Lagers (31) auf der Kurbel (28) montiert ist und aufgrund dieser Montage in Abhängigkeit von der Drehung der Welle (14) orbital schwingt, um eine Vibrationsbewegung zu induzieren.

2. Orbitalvibrator nach Anspruch 1, bei dem die Kurbel (28) durch ein scheibenförmiges Element gebildet ist, dessen Mittelpunkt relativ zur Mittellinie (C) der drehbaren Welle (14) exzentrisch angeordnet ist.

3. Orbitalvibrator nach Anspruch 2, bei dem das scheibenförmige Element (28) mit der drehbaren Welle (14) verkeilt ist.

4. Orbitalvibrator nach Anspruch 2, bei dem das scheibenförmige Element (28) einstückig mit der drehbaren Welle (14) ausgebildet ist.

5. Orbitalvibrator nach den vorhergehenden Ansprüchen, bei dem die Reaktionsmasse (30) generell kreisförmig mit einer in ihr vorgesehenen konzentrischen kreisförmigen Öffnung ausgebildet ist.

6. Orbitalvibrator nach Anspruch 5, beim die konzentrische kreisförmige Öffnung das Lager (31) aufnimmt.

7. Orbitalvibrator nach den vorhergehenden Ansprüchen, bei dem das Lager (31) aus Stahl hoher Festigkeit hergestellt ist.

8. Orbitalvibrator nach Anspruch 7, bei dem die Reaktionsmasse (30) aus unlegiertem Stahl hergestellt ist.

9. Orbitalvibrator nach den vorhergehenden Ansprüchen mit einem die Reaktionsmasse (30) ummantelnden generell zylindrischen Gehäuse (12).

10. Orbitalvibrator nach Anspruch 9, bei dem die drehbare Welle (14) im Gehäuse (12) drehbar gelagert ist.

11. Orbialvibrator nach Anspruch 10, bei dem die drehbare Welle auf den Seiten der Kurbel (28) zwei Schultern (42, 44) enthält, welche mit Lagern (18, 22) in Eingriff stehen, in denen die drehbare Welle (14) zwecks Aufrechterhaltung ihrer Lage in Bezug auf das Gehäuse (12) gelagert ist.

12. Orbitalvibrator nach den vorhergehenden Ansprüchen, bei dem das Lager (31) zur Montage der Reaktionsmasse (30) einen Innenlauf (32) und einen Außenlauf (46) besitzt.

13. Orbitalvibrator nach Anspruch 12, bei dem der Innenlauf (32) des Lagers mittels eines Paars von Sprengringen (34, 36) am Kurbelmechanismus befestigt ist.

14. Generator für seismische Signale mit einer Anordnung zur Erzeugung periodischer seismischer Signale auf kontinuierlicher Basis, welche durch einen Orbitalvibrator nach den vorhergehenden Ansprüchen gebildet ist.

EP 0 302 152 B1

Fig. 4
( PRIOR ART )

Fig. 3
( PRIOR ART )

Fig. 2

Fig. 1

6